# EUROPÄISCHE PATENTSCHRIFT

(11) **EP 2 647 680 B1**
(45) Veröffentlichungstag und Bekanntmachung des Hinweises auf die Patenterteilung: **31.08.2016**
(21) Anmeldenummer: 13403001.4
(22) Anmeldetag: 20.03.2013
(51) Int. Cl.: C09D 201/00, C09D 5/02, A01N 25/00, C08L 101/00

(54) **Verfahren zur Herstellung von Metallnanopartikeldispersionen und Produkte daraus**
Method for manufacturing metallic nanoparticle dispersions and products made from them
Procédé de fabrication de dispersions de nanoparticules de métal et produits en étant issu

(30) Priorität: 03.04.2012 DE 102012006640
(43) Veröffentlichungstag der Anmeldung: 09.10.2013
(73) Patentinhaber: THÜRINGISCHES INSTITUT FÜR TEXTIL- UND KUNSTSTOFF-FORSCHUNG e.V., 07407 Rudolstadt (DE)
(72) Erfinder: Gladitz, Michael, 07318 Saalfeld (DE); Reinemann, Stefan, 07407 Rudolstadt (DE); Lärz, Andreas, 10317 Berlin (DE)
(74) Vertreter: Wagner, Gerd

(56) Entgegenhaltungen:
- EP-A2- 2 140 958
- DE-A1-102007 026 397
- MICHAEL GLADITZ ET AL: "Preparation of Silver Nanoparticle Dispersions via a Dendritic-Polymer Template Approach and their Use for Antibacterial Surface Treatment", MACROMOLECULAR MATERIALS AND ENGINEERING, Bd. 294, Nr. 3, 12. März 2009 (2009-03-12) , Seiten 178-189, XP055064827, ISSN: 1438-7492, DOI: 10.1002/mame.200800269

## Beschreibung

Die vorliegende Erfindung betrifft ein Verfahren zur Herstellung partikulärer, nicht kovalenter Verbindungen in Form von Metallnanopartikeldispersionen, bestehend aus amphiphilen dendritischen Makromolekülen und Metallnanopartikeln, vorzugsweise Kupfernanopartikeln. Die Verbindungen zeichnen sich aufgrund ihrer Zusammensetzung durch ausgeprägte funktionelle Eigenschaften aus, vor allem weisen sie eine enorm hohe antibakterielle, fungizide und algizide Wirksamkeit aus, weshalb die Erfindung auch deren Verwendung als potentes antimikrobielles Mittel umfasst. Weitere funktionelle Eigenschaften lassen sich durch diese Verbindungen darstellen, wie zum Beispiel elektrische Leitfähigkeit, magnetische und katalytische Eigenschaften und andere. Die Erfindung umfasst neben der Synthese und Charakterisierung dieser Verbindungen aber auch deren Verwendung zur anti-mikrobiellen Oberflächenbeschichtung oder zur Inkorporation in Materialien und Ausrüstungen, beispielsweise für den Medizinbereich.

### [Stand der Technik]

Die stabile und agglomeratfreie Herstellung von Metallnanopartikeln und deren Verarbeitbarkeit, als Folge ihrer Löslichkeit und Dispergierbarkeit, stellt nach wie vor ein ernsthaftes Problem für viele Anwendungsbereiche dar. Dieses fundamentale Problem erstreckt sich von technischen Applikationen, wie beispielsweise Katalysatoren, leitfähigen transparenten Schichten und leitfähigen Tinten, magnetischen Fluiden, über biotechnologische und medizinische Applikationen wie neuartigen Biosensoren oder Wirkstofftransportsystemen bis hin zu Anwendungen im Biomaterialbereich, wie z. B. der Generierung biomimetischer und keimfreier Materialoberflächen sowie Oberflächen mit speziellen Bioadhäsionseigenschaften. Neben dem immanenten Problem der Agglomerationsneigung und limitierten Matrixkompatibilität von nativen Metallnanopartikeln, besteht gerade bei Teilchen, ausgehend von di- und trivalenten Metallionen, das fundamentale Problem der Instabilität durch Disproportionierung. Ausmaß und Kinetik dieser Erscheinung nehmen mit abnehmender Partikelgröße erheblich zu.

Insbesondere auch im Hinblick auf Materialkompositionen mit einer mikrobioziden Wirkung werden in den Patenten DE102007026397 und EP1958624 dendritische Polymere als Träger für biozide Metallionen, vorzugsweise monovalente Silberionen bzw. divalente Kupferionen beschrieben. Gleichsam macht DE102007026397 darauf aufmerksam, dass diese ionischen Nanokomplexverbindungen zwar kurzzeitig eine außerordentlich hohe antimikrobielle Wirksamkeit entfalten können, für langanhaltendere Wirksamkeit aber Abmischungen mit metallischen Partikelsystemen günstiger sind, da hierdurch eine höhere Depotwirkung erzielbar ist. Derartige ionische Nanokomplexverbindungen sind somit in ihrer Verwendung stark limitiert. Zur Überwindung dieser Einschränkung stellt DE102008031310 eine Methode, ebenfalls aufbauend auf dendritischen Trägerarchitekturen, zur Herstellung von Materialnanopartikeldispersionen mit sehr schmalbandiger monomodaler Partikelgrößenverteilung und deren Anwendung als antimikrobiell wirksame Mittel zur Verfügung, wobei die Nanopartikel bevorzugt Silbernanopartikel oder Mischungen aus Silber- und Kupfernanopartikeln sind.

Es gibt aber zahlreiche Anwendungen in denen Silber, sei es aus Kostengründen, wegen gesundheitlicher und/oder Umweltrisiken nicht eingesetzt wird. Hier scheitert das in DE102008031310 beschriebene Verfahren, da auf diese Art erzeugte Kupfernanopartikel allein schon durch die Synthesebedingungen zum raschen Abbau aufgrund ihres unedleren Charakters als Silber und infolge Disproportionierung neigen. Weiterhin sind die demgemäß erzeugten monodispersen und intramolekular eingebetteten Nanopartikel eher hydrophober Natur und dadurch in ihren Lösungs- und Dispersionseigenschaften und Matrixkompatibilität auf lipophilere Systeme limitiert.

### [Aufgabe der Erfindung]

Somit liegt der Erfindung unter anderen das technische Problem zugrunde, ein geeignetes Verfahren zu entwickeln und, ausgehend von di- und höhervalenten Metallionen sowie dendritischen Trägerpolymeren, Metallnanopartikel, insbesondere nichtkovalente Kupfernanopartikelverbindungen bereitzustellen, bei denen die vorstehend erläuterten Nachteile nicht auftreten und die sich insbesondere durch eine hohe Lagerstabilität sowie Verträglichkeit mit Polymerwerkstoffen auszeichnen und unter anderem als potentes antimikrobielles Mittel mit breitbandiger Langzeitwirkung einsetzen lassen.

Die Lösung dieses technischen Problems wird mit den aus den Patentansprüchen ersichtlichen wesentlichen Merkmalen der erfinderischen Lehre erreicht. Bei den der Erfindung zugrundeliegenden Untersuchungen zeigte sich überraschenderweise, dass die Reduktion von ionischen Metall-Komplexen, ausgehend von dendritischen Polymerarchitekturen als makromolekulare Träger, Chelatliganden und Komplexbildner in einem geeigneten Medium und unter Erwärmung durch Mikrowelleneinstrahlung zu stabilen nichtionischen Nanopartikelkompositionen mit definierter und kennzeichnender Partikelgrößenverteilung führt. Im Gegensatz zum Stand der Technik sind nach der erfindungsgemäßen Lehre nicht nur vorwiegend hydrophile Kompositionen, sondern amphiphile Partikelkompositionen mit bedeutend günstigeren Lösungs- und Dispergiereigenschaften, wie sie im Hinblick auf eine hohe Matrixkompatibilität gerade auch zur Modifizierung von polymerbasierten Werkstoffen (Beschichtungen, Compounds) von enormer Bedeutung sind, herstellbar.

Durch die spezielle Oberflächenchemie und das Nichtvorhandensein von ionischen Resten besitzen die Metallnanopartikel eine vergleichsweise hohe Stabilität gegenüber dem raschen Zerfall infolge von Disproportionierungseffekten und weisen somit eine bessere Langzeitfunktionalität, hohe Depot- und biologische Wirkung auf. Darüber hinaus kann diese Eigenschaft auch für technische Anwendungen, wie elektrisch leitfähige oder magnetische Systeme, von großer Bedeutung sein. In den genannten Anwendungsbereichen spielen neben der Reinheit und Stabilität auch die Größe und Größenverteilung der Partikel eine entscheidende Rolle bezüglich der Funktionalität. Eine Mischung aus Partikeln unterschiedlicher mittlerer Teilchengröße kann zur Einstellung von Freisetzungseigenschaften und Langzeitwirksamkeit bei biologisch aktiven Ausrüstungen auf Basis mikrobiozid wirkender Metallpartikel genutzt werden. Aber auch im Bereich der Ausbildung leitfähiger Strukturen (Perkolationsnetzwerke) für technische Anwendungen werden derartige Größen- und Struktureffekte genutzt.

Wie bereits angeführt, bestehen die nach dem erfindungsgemäßen Verfahren hergestellten Partikel aus einem dendritischen Polymermaterial und inter- und intra-molekular eingelagerten Metallpartikeln definierter Größe, wobei dieses Produkt eine bimodale Größenverteilung der Metallnanopartikel aufweist.

Das dendritische Polymermaterial ist ein partiell modifiziertes dendritisches Makromolekül, basierend auf Polyester, Polyether, Polyglycerin, Polyglycerol, Polyol, Polyamin oder Polyamid bzw. Kombinationen daraus, wie beispielsweise Polyamidoamine oder Polyesteramide. Besonders bevorzugt als dendritisches Polymer ist ein hoch- bzw. hyperverzweigtes Polyamin bzw. Polyethylenimin (hvz PEI).

Das dendritische Polymermaterial hat einen Verzweigungsgrad zwischen 50 und 100% und ein Molekulargewicht von 5000 bis 50000g/mol.

Das dendritische Polymer wird durch polymeranaloge Modifizierung der zugänglichen reaktiven Endgruppen mit aliphatischen, verzweigten oder aromatischen Resten, bevorzugt mit n-Alkylen mit einer Kettenlänge zwischen 6 und 24 Kohlenstoffatomen bzw. Kombinationen verschieden langer n-Alkyle, modifiziert. Der Grad der Modifizierung (X) liegt bezogen auf die nominale Gesamtzahl an Endgruppen (N) des dendritischen Polymermaterials zwischen 30% ≤ X ≤ 90%, besonders bevorzugt ist X = 50% bis 70% von N.

Die Modifizierung kann, wie in den oben aufgeführten Quellen beschrieben, ausgeführt werden. Das modifizierte dendritische Polymermaterial weist amphiphile Eigenschaften auf, da es sowohl polare als auch unpolare Anteile (Segmente) in seiner Makromolekulararchitektur aufweist. Die amphiphilen Eigenschaften sind kritisch für die Löslichkeits- und Dispergierbarkeitseigenschaften des späteren partikulären Produkts. Bevorzugt sind, zumindest im Hinblick auf den Einsatz als antimikrobielles und biozides Mittel, eine nicht so hohe Wasserlöslichkeit. Die bekannten Verfahren der mikrowellengestützten Synthese von Metallnanopartikel führen jedoch zu wasserlöslichen Produkten/Verbindungen.(M. Tsuji, M. Hashimoto, Y. Nishizawa, M. Kubokawa and T. Tsuji: Microwave-Assisted Synthesis of Metallic Nanostructures in Solution. Chem. Eur. J. 2005, 11, 440 - 452). Zur Erzeugung der erfindungsgemäßen nicht kovalenten Verbindungen wird ein amphiphiles und nach außen hydrophober eingestelltes dendritisches Trägerpolymer eingesetzt, so dass nach der vollständigen Reduktion der Precursorverbindung durch eine Kombination aus Polyolprozess und zusätzlichen Reduktionsmitteleinsatz ein amphiphiles, aber weitgehend wasserunlösliches partikuläres Produkt vorliegt.

Im Anschluss an das Lösen bzw. das homogene Dispergieren des zuvor modifizierten dendritischen Polymers in einem geeigneten Medium A (mit Siedepunkt 1), einem aprotisch polaren oder unpolaren Medium bzw. einer Mischung mit geeigneter Polarität daraus oder einem protischen Lösemittel, besonders bevorzugt sind 1-Propanol oder 2-Propanol, wird der so erzeugten Lösung bzw. Dispersion die Metallprecursorverbindung in Form eines Metallionen-Precursors (z. B. eines Salzes) zugegeben. Hierbei ist das molare Verhältnis von zur Komplexierung der dissoziierenden Metallionen befähigten funktionellen Gruppen (Z) im Rückgrat des dendritischen Polymers und der Gesamtheit an über den Mechanismus der Komplexbildung aufzunehmenden Metallionen (Me^{x+}) kritisch (Beladungsverhältnis). Das Beladungsverhältnis Z : Me^{x+} liegt im Bereich von 64 : 1 bis 2 : 1, bevorzugt zwischen 16 : 1 und 4 : 1. Die allmähliche und vollständige Bindung der Precursormetallionen an das dendritische Trägerpolymer im Medium A (mit dem Siedepunkt 1) kann bei einer Temperatur im Bereich der Raumtemperatur bis unterhalb der Siedetemperatur von Medium A mittels aller vom Stand der Technik her bekannten Rühr- bzw. Dispergiertechniken erfolgen. Besonders bevorzugt wird die Auflösung der Precursorverbindung bei Raumtemperatur und/oder eine Unterstützung durch Ultraschalleinwirkung.

Im nachfolgenden Schritt wird die so hergestellte Lösung bzw. Dispersion von am dendritischen Trägerpolymer komplexierten di- und höhervalenten Metallionen, vorzugsweise divalenten Metallionen, wie beispielsweise Kupferionen, mit einer Lösung B (mit einem Siedepunkt 2, welcher erheblich über dem Siedepunkt 1 von Medium A liegt) eines geeigneten Reduktionsmittels, besonders bevorzugt ist Natriumhypophosphit, in einem protischen Lösemittel, insbesondere Ethylenglykol, vereint. Die Vereinigung von A und B erfolgt bevorzugt durch Rührung bei Raumtemperatur unter Inertatmosphäre (z.B. Beschleiern mit Stickstoff) oder durch Einblasen von Inertgas bei Raumtemperatur. Das über die Lösungen A und B eingestellte molare Verhältnis von Reduktionsmittel zu Metallionen ist kritisch. Es beträgt 1 : 1 bis 10 : 1, besonders bevorzugt beträgt es 2 : 1 bis 4 : 1.

Das so hergestellte und homogenisierte Gemisch aus den Lösungen bzw. Dispersionen A und B, wird nun unter Inertgasatmosphäre (z.B. Spülen mit Stickstoff) und definiertem abgesenkten Druck in einer Mikrowelle bei einer Frequenz von typischerweise 2,45 GHz unter Rührung bzw. einer anderen Art von für den Mikrowelleneinsatz geeigneten üblichen Mischvorrichtungen bis zum Sieden erhitzt und gehalten.
In einer besonders bevorzugten Ausführungsform erhitzt sich das Gemisch zunächst bis zur Siedetemperatur von Medium A, welche unterhalb der Siedetemperatur 2 von Medium B liegt. Die so herbeigeführte Evaporation von Medium A kann durch Justierung des Druckes (Vakuum) befördert werden. Das dabei abdampfende Medium A lässt sich durch aus Stand der Technik bekannte und übliche Vorrichtungen aus dem Abgasstrom des Mikrowellenraumes zurückgewinnen. Im Anschluss an die vollständige Verdampfung von Medium A erfolgt die weitere Erhitzung der nun aufkonzentrierten Dispersion bis zur Siedetemperatur 2 von Medium B oder einer konstanten Reaktionstemperatur unterhalb dieser Temperatur, welche sich durch die Enthalpie des Gesamtreaktionssystems und den Umgebungs-/Atmosphärendruck einstellt. Die hierbei verwendete Mikrowellenleistung liegt üblicherweise im Bereich von 80 bis 850 Watt. Die infolge der Reduktion der komplexierten Metallionen beobachtbare Farbänderung der Lösung/Dispersion kann als Indikator für die Reaktionsführung dienen. Es kann aber auch ein festes Temperatur/Zeit-Regime, welches entsprechend des Ansatzvolumens und der Mikrowellenleistung abgestimmt ist, eingestellt und gefahren werden. Ansonsten wird üblicherweise zur Vervollständigung der Reduktion bis zu max. 5 Minuten über den ersten Farbumschlagspunkt gefahren. Hierbei ist vor allem die Rührung und Homogenität des Reaktionsgemisches kritisch und durch entsprechende Maßnahmen sicherzustellen. Ebenso ist die Viskosität der sich bildenden Produktdispersion kritisch für die Vollständigkeit der Reduktionsreaktion und die Gleichmäßigkeit des erfindungsgemäßen partikulären Produktes. Diese kann auf eine dem Fachmann bekannte Weise zum einen durch die Ausgangskonzentration der Lösungen/Dispersionen von A und B oder auch durch den Zusatz geeigneter Prozess- und Hilfsmittel beeinflusst werden.
Geeignete Metallionen umfassen Cu2+, Sn2+, Ni2+, Pd2+, Pt2+, Co2+, Fe2+, Zn2+, Fe3+, Mo3+, Cr3+, Nb3+ oder deren Mischungen oder Legierungen.
Die beschriebene erfindungsgemäße Verfahrensweise ermöglicht eine Reduktionsreaktion zwischen der im Medium A gelösten amphiphilen dendritischen Polymer-Metall-Komplexverbindung und dem Reduktionsmittel, gelöst im Medium B. Zur Einleitung der Reduktionsreaktion müssen die Reaktanten auf molekularer Ebene wechselwirken können, was aber durch die unterschiedliche Löslichkeit der amphiphilen dendritischen Polymer-Metall-Komplexverbindung und des Reduktionsmittels bei Raumtemperatur nicht der Fall ist. Erst durch die Erwärmung bis zur Siedehitze von Medium A und durch dessen Evaporation wird eine Zusammenführung der amphiphilen dendritischen Polymer-Metall-Komplexverbindung mit dem Reduktionsmittel in Medium B und dadurch, bei Erreichen der Siedetemperatur von Medium B, die vollständige Reduktion der Metallionen ermöglicht. Nur durch eine vollständige Reduktion aller Metallionen kann eine rasche Disproportionierung verhindert und somit nanoskalige Produkte mit stabilen und reproduzierbaren Eigenschaften erzeugt werden.

Durch einfaches Mischen der Lösungen tritt indes keine Reduktionsreaktion ein. Auch bei Verwendung eines Mediengemisches, in dem Medium B nur eine geringfügig höhere Siedetemperatur als Medium A aufweist, tritt keine oder nur eine unvollständige Reduktionsreaktion auf.
Die vollständige Reduktion der primär in der Lösung A komplexiert vorliegenden Metallionen bei bzw. nahe der Siedetemperatur 2 von Medium B, wobei Medium B durchaus selbst auch reduzierende Eigenschaften aufweisen kann, erfolgt durch ein geeignetes Reduktionsmittel bzw. eine Kombination aus Reduktionsmitteln. Die Eignung ist durch die Löslichkeitseigenschaften und Reduktionsstärke gegeben. Geeignete Reduktionsmittel sind beispielsweise Natriumborhydrid, Lithiumtriethylborhydrid (Superhydrid), Natriumdihydrogenphosphit, Natriumhypophosphit-Monohydrat oder Hydrazin. Bevorzugt kommt Natriumhypophosphit gelöst in Ethylenglykol zum Einsatz.
Auf dieser Weise sind nicht nur mikrobiozid wirksame partikuläre Produkte, bevorzugt auf Basis von Kupfer und/oder Zink herstellbar, sondern auch magnetische und paramagnetische und/oder leitfähige Produkte, beispielsweise mit Partikeln aus Eisen, Kobalt, Nickel sowie Mischungen und deren Legierungen daraus, und katalytisch aktive Produkte, beispielsweise mit Partikeln aus Palladium oder Platin.

Die nach dem dargelegten Verfahren erhaltenen partikulären Produkte zeichnen sich neben einer bevorzugt bimodalen Partikelgröße, auch durch ihre amphiphilen und nicht wasserlöslichen Eigenschaften aus. Weiterhin können auch zwei- und höherwertige Metalle stabil in dendritische Polymerstrukturen eingelagert werden.

Die nach dem erfindungsgemäßen Verfahren erhaltene Produktdispersion kann entweder direkt zur Verarbeitung und Herstellung, z.B. einer biozid ausgerüsteten Polymerbeschichtung oder eines Polymerwerkstoffs unter anderem in Form eines Harzes eingesetzt werden, wobei bevorzugt das Medium ein Teil des Harzbildnersystems ist, oder es kann das partikuläre Produkt durch Entfernung des restlichen Dispersionsmediums isoliert werden. Die Entfernung des Dispersionsmediums kann durch dem Stand der Technik nach bekannte Methoden erfolgen, beispielsweise durch Fällung und Umkristallisation, Zentrifugation und/oder Trocknung bei erhöhter Temperatur im Vakuum. Das so erhaltene partikuläre Produkt kann in das Volumen eines Werkstoffes, vorzugsweise eines Polymerwerkstoffes, beim Urformen durch Schmelzeextrusion, Spritzgießen, Gießen, Lösungs- oder Schmelzspinnen oder nachträglich beispielsweise durch Tränken oder Druckimprägnierung erfolgen.
In einer anderen Ausführungsform findet die Isolierung direkt in Verbindung mit dem Umformprozess der Extrusion statt, nämlich durch Vakuumentgasung bei der Compoundierung/Extrusion.
In einer weiteren Ausführungsform wird das Medium B durch geeignete chemische Umsetzungen, wie beispielsweise eine Veresterungsreaktion, unter Zuhilfenahme geeigneter Linker, Kettenverlängerungs- und/oder Vernetzungsmittel in ein Polymeres bzw. einen Bestandteil des Matrixpolymerwerkstoffs überführt, was zu thermoplastischen Massen mit eventuell teilvernetzten Strukturen führen kann. Dies kann durch vorbekannte Methoden der reaktiven Extrusion oder durch reaktive Umsetzung, bspw. in einem Autoklaven oder Knetaggregat, erfolgen.

Darüber hinaus betrifft die Erfindung ein Produkt (Feststoffteilchen oder Dispersion), bestehend aus einem dendritischen Polymermaterial und inter- und intramolekular eingelagerten bzw. eingebetteten Metallpartikeln definierter Größe, wobei dieses Produkt insbesondere eine bimodale Größenverteilung aufweist, sowie dessen weitere Verwendungen als biozides Mittel, einschließlich:
- Anwendungen im Holzschutzbereich
- Anwendungen in mit Holzbestandteilen gefüllten Kunststoffen (z.B. Wood-Plastic-Compounds)
- Anwendungen in naturfaserhaltigen Kunststoffen
- Anwendungen zur Schimmelvorbeugung und -beseitigung in Klebern, Putzen, Tapeten, Farben, Fugen- oder Dichtmassen
- Anwendungen als Bestandteil von Antifoulingausrüstungen
- Anwendungen im Kosmetikbereich, wie Cremes und Emulsionen
- Anwendungen im medizinischen Bereich, wie Cremes, Emulsionen, Wundauflagen, Katheter, flächige und textile Gebilde
- Anwendungen in der Wasseraufbereitung/-entkeimung und Biofilmvorbeugung
- Anwendungen zur Bekämpfung von Legionellen und Algen
- Anwendungen zur Bekämpfung von Viren

Weitere mögliche Verwendungen des erfindungsgemäßen Produktes (Feststoffteilchen oder Dispersion, bestehend aus einem dendritischen Polymermaterial und inter- und intra-molekular eingelagerten bzw. eingebetteten Metallpartikeln definierter Größe, wobei das Produkt insbesondere eine bimodale Größenverteilung aufweist, sind auch:
- Verwendung zum Aufbau elektrisch leitfähiger Strukturen
- Verwendung zum Aufbau magnetischer Strukturen
- Katalysatoranwendungen
- Pigment-, Sensor- und Markeranwendungen
- Anwendung in Systemen zur Identitätserkennung
- Anwendungen im Bereich der Filter-, Membran- und Katalysatortechnik

Dazu kann das erfindungsgemäße Produkt bspw. zu einer Tinte, Druckpaste o.ä. Formulierungen zur Erzeugung der o.g. Strukturen hinzugegeben werden.

Die besonderen Eigenschaften der erfindungsgemäßen Zusammensetzung werden anhand von 3 Abbildungen veranschaulicht.

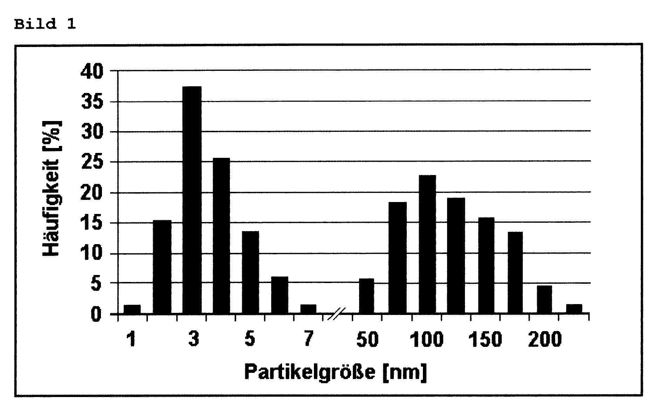

Die Abbildung 1 zeigt eine typische Teilchengrößenverteilung einer erfindungsgemäß hergestellten Kupferpartikelkomposition, quantifiziert anhand der Auswertung von mehreren transmissionselektronenmikroskopischen Aufnahmen. Die erfindungsgemäß erreichte bimodale Größenverteilung der Kupfernanopartikel mit zwei in ihrer Größenverteilung schmalbandigen und sich nicht überlappenden Fraktionen, ist deutlich erkennbar.

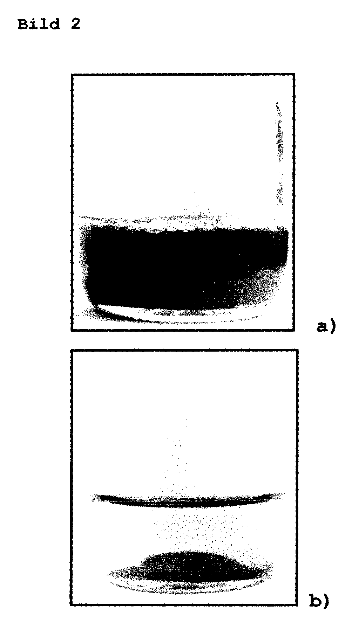

Die Abbildung 2 veranschaulicht die Stabilität von erfindungsgemäßen Nanopartikelkompositionen am Beispiel von Kupfer (a) gegenüber einer Dispersion gleicher Konzentration ohne Zusatz eines geeigneten dendritischen Polymermaterials als Komplexbildner und Templat/Träger bzw. Stabilisator (b). Die Bilder wurden 74 Tage nach der Herstellung der Dispersionen aufgenommen.

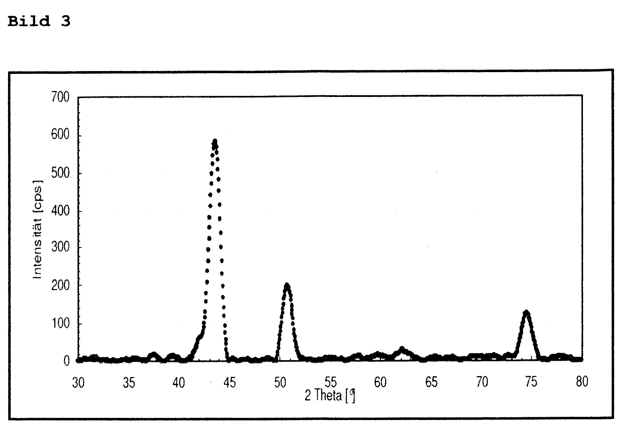

Die Abbildung 3 zeigt ein typisches Röntgendiffraktogramm eines erfindungsgemäßen bimodalen, amphiphilen und nicht wasserlöslichen Kupferpartikelprodukts, gemessen per WAXS mit Cu-K_{α}-Strahlung. Das Diffraktogramm ist charakteristisch für die Kristallstruktur von Kupfer und belegt die Erzeugung von stabilen Metallnanopartikeln. Das Spektrum wurde unverändert und unmittelbar nach der Erzeugung des partikulären Produkts mittels erfindungsgemäßem Verfahren bzw. nach 1000 h Klimalagerung des isolierten partikulären Produkts aufgenommen, wodurch die Lagerstabilität ohne Veränderung der Produktmerkmale verdeutlicht wird.

Die Erfindung wird nachfolgend anhand einiger Ausführungsbeispiele beschrieben, welche den Erfindungsgedanken erläutern sollen, ohne ihn dabei einzuschränken.

### [Beispiele]

### Beispiel 1:

### Herstellung eines erfindungsgemäßen partikulären Produktes in Form einer Dispersion

Es wird eine Lösung bzw. Dispersion A aus Polyethylenimin, zu 50% modifiziert mit n-Hexadekansäure, in 2-Propanol unter Rühren bei Raumtemperatur hergestellt. Anschließend wird eine geeignete Menge an Metallprecursor, bspw. Kupferacetat im Verhältnis Z : Cu²⁺= 8 : 1, zugegeben und bis zur vollständigen Lösung der Verbindung bzw. Komplexierung der Kupferionen gerührt. Die Bildung eines Cu²⁺-Amin-Komplexes ist an der intensiven Blaufärbung zu erkennen und kann bspw. auch durch UV/VIS-Messung anhand der Extinktion bei rund 605 nm qualitativ und mittels Vergleich mit einer geeigneten Kalibrierkurve auch quantitativ erfasst werden.

Des Weiteren wird eine Lösung B aus einem geeigneten Reduktionsmittel, hier bspw. Natriumhypophosphit, in Glykol durch Rühren bei Raumtemperatur hergestellt. Die Lösungskonzentration wird so angesetzt, dass bei der anschließenden Vermischung der Lösungen A und B ein Verhältnis von Reduktionsmittel zu Kupferionen von 2 : 1 erhalten wird. Dabei kann das Volumenverhältnis von Medium A zu Medium B je nach den gewünschten Eigenschaften variiert werden, bevorzugt liegt es zwischen 1 zu 1 und 10 zu 1, wobei die letztlich einzig einschränkenden Limitierungen die Löslichkeit des Reduktionsmittels bzw. des Metallionen-Komplexes im entsprechenden Medium sowie die Viskosität und die dadurch bedingte Homogenität der mit der Mikrowellenerwärmung zunehmend konzentrierteren Mischung betreffen.

Die Lösungen bzw. Dispersionen werden durch Rühren oder durch Einblasen von Stickstoff homogen vermischt. Anschließend wird die Mischung unter Stickstoffdurchfluss in einem Mikrowellenofen bei einer Leistung von 450 W erwärmt. Die Erwärmung findet unter Rührung zwecks Vermeidung von Siedeverzug und Homogenisierung des Reaktionsgemisches statt. Nach kurzer Erwärmungsphase tritt das Sieden der Mischung (Siedetemperatur 1 von Lösungsmedium A in der Mischung) ein. Es wird keine Farbänderung der Lösung beobachtet. Die entstehenden Dämpfe werden abgesaugt und das Lösungsmittel beispielsweise über eine Kühlfalle aufgefangen. Nach Beendigung des Siedevorgangs kommt es bei konstanter Leistung zur weiteren Erhitzung des nun konzentrierteren Reaktionsgemisches. Nach kurzer Erwärmungsphase tritt erneut Sieden ein (Siedetemperatur 2 von Lösungsmittel B). Es wird dabei ein für die nun eintretende Reduktion der Metallionen charakteristischer Farbumschlag (blauer Cu²⁺-Amin-Komplex zu roten Kupfernanopartikeln) beobachtet.

Die Reaktion wird nach Auftreten des Farbumschlags für weitere zwei Minuten unter konstanter Leistung gehalten. Nach Ausschalten der Mikrowellenstrahlung kommen das Sieden und auch die Reduktionsreaktion unmittelbar zum Erliegen. Die auf diese Weise hergestellte Produktdispersion lässt man unter Rühren und Beschleierung mit Stickstoff noch leicht abkühlen, bis diese händelbar ist.

Das so erhaltene Produkt ist eine Dispersion von Kupfermetallpartikeln aus einem dendritischen Polymermaterial und inter- und intra-molekular eingelagerten bzw. eingebetteten Metallteilchen definierter Größe, wobei es insbesondere durch seine bimodale Größenverteilung, wie in Abbildung 1 dargestellt, charakterisiert ist.

### Vergleichs-Beispiel 2:

### Herstellung einer vergleichbaren Dispersion nach dem vom Stand der Technik her bekannten Polyolsyntheseverfahren

Eine analog dem Beispiel 1 hergestellte Lösung bzw. Dispersion A wird mit einer aus diesem Beispiel bekannten gleichen Menge an Glykol vermischt, wobei kein Reduktionsmittel zugesetzt wurde. Die Mischung wird, wie schon in Beispiel 1, in einem Mikrowellenofen behandelt. Diese Verfahrensweise ist praktisch adäquat zu der aus der Literatur bekannten Polyolsynthese-Route, wobei das Glykol bei hoher Temperatur (nahe oder gleich der Siedetemperatur) selbst als Reduktionsmittel fungiert. Bei der Erhitzung durch die Mikrowellenstrahlung erfolgt nacheinander das Sieden der beiden Bestandteile (Medium A und Medium B) und schließlich auch eine für die Reduktion der Kupferionen charakteristische Farbänderung. Das Produkt zeigt zunächst ein dem Beispiel 1 adäquates Erscheinungsbild. Allerdings tritt bereits innerhalb der ersten 48h nach Herstellung eine zunehmende Blaufärbung der Produktdispersion ein. Die Blaufärbung ist ein eindeutiger Hinweis auf die Rückreaktion zum Cu²⁺-Amin-Komplex aufgrund der Bildung von Kupferionen infolge partiellen Zerfalls von Kupfer durch Desproportionierung und der damit verbundenen raschen Oxidation.

### Vergleichs-Beispiel 3:

### Herstellung einer vergleichbaren Dispersion ohne Einsatz eines dendritischen Polymermaterials

Bei einem Lösungsgemisch, hergestellt gemäß Beispiel 1, wurde jedoch kein dendritisches Polymermaterial als Komplexbildner, Templat/Träger bzw. Stabilisator eingesetzt. Das vor der Mikrowellenbehandlung farblos transparente bis leicht hellblau gefärbte Lösungsgemisch wurde wiederum analog zu Beispiel 1 in einem Mikrowellenofen behandelt. Dabei erfolgte ein nach dem gleichen Temperatur-Zeit-Regime ablaufendes Sieden der beiden Bestandteile (Medium A, Medium B) und schließlich auch die für die Reduktion der Kupferionen charakteristische Farbänderung. Das Produkt liefert zunächst ein dem Beispiel 1 adäquates Erscheinungsbild. Allerdings erfolgt bereits innerhalb kurzer Zeit, ca. 48h nach der Herstellung, eine signifikante Sedimentation von Kupfer (roter Bodensatz). Innerhalb von 4 Tagen liegt ein komplett sedimentierter Zustand vor, wobei im Gegensatz zu Beispiel 2 aber keine Blaufärbung der überstehenden Lösungsmittelphase (v.a. Glykol) vorliegt, wie auch in Abbildung 2 dokumentiert ist. Das heißt, es tritt zwar kein rascher Zerfall durch Disproportionierung auf, wie im Fall der Herstellung nach Beispiel 2, sondern die Metallpartikel wachsen weiter (Ostwald-Reifung) und verlieren so ihre Nanoskaligkeit sowie die damit verbundenen Eigenschaftsvorteile. Dieses Verhalten ist ein deutlicher Befund für die stabilisierende Wirkung im Fall der erfindungsgemäßen Produktzusammensetzung, bestehend aus einem amphiphilen dendritischen Polymermaterial und inter- und intra-molekular eingelagerten bzw. eingebetteten Metallpartikeln. Diese Partikel zeigen eine enorm erhöhte Homogenität und Dispersionsstabilität.

**Tabelle 1: Vergleich der Stabilität von partikulären Produkten unterschiedlicher Zusammensetzung und Herstellungsverfahren**

| Ausführungsform gemäß | System | Sedimentationsstabilität | Disproportionierung |
|---|---|---|---|
| Beispiel 1 | Erfindungsgemäß | Hoch | Nein |
| Beispiel 2 | Polyolsynthese, EG als RM | Gering | Ja |
| Beispiel 3 | ohne hvz-Trägerpolymer | Gering | Nein |
| | | | |

| | | | |
|---|---|---|---|
| EG: Ethylenglykol bzw. Glykol; RM: Reduktionsmittel; hvz: dendritisch hoch- bzw. hyperverzweigt | | | |

### Beispiel 4

### Experimentelle Ergebnisse zur antibakteriellen und antimykotischen Wirkung eines Beschichtungsmaterials ausgerüstet mit einem erfindungsgemäßen partikulären Produkt

Es wurden Beschichtungen mit einem Anteil an erfindungsgemäßen Partikeln, welche durch Fällen, Waschen und Trocknen aus einer nach Beispiel 1 hergestellten Dispersion isoliert und gewonnen wurden, hergestellt. Als Beschichtungspolymer diente ein geeignetes filmbildendes Polyamidmaterial (Ultramid 1C, BASF SE). Dieses wurde zunächst entsprechend den Herstellerempfehlungen in Alkohol gelöst. Zu einer solchen Lösung wurden, bezogen auf den Gehalt an Polymer in der Lösung, verschiedene Anteile an erfindungsgemäßem Partikelmaterial zugegeben (0,6, 1,9 und 3,1 Ma-% an Kupfer entsprechend) und die Mischungen intensiv homogenisiert. Aus den so erhaltenen Formulierungen wurden durch Nassauftrag per Rakeltechnik auf ein geeignetes Substratfolienmaterial dünne Schichten appliziert, getrocknet und autoklaviert. Die biologische Wirkung der so präparierten hochtransparenten Beschichtungen (Dünnschichten) wurde im Vergleich zu einer gleichartigen, aber nicht modifizierten Beschichtung (Dünnschicht) aus dem gleichen Polymermaterial gemäß ISO 22196 mit *S.aureus, K.pneumoniae* und *C.albicans* als Testkeime bestimmt. Die ausgewählten Testkeime stehen stellvertretend für die Wirkung gegen grampositive (wie u.a. *Streptococcus, Bacillus, Lactobacillus*) und gramnegative Bakterien (wie u.a. *Escherichia coli, Salmonella, Enterobacter, Legionella*), sowie Pilze, speziell Hefepilze (wie u.a. *Malassezia furfur*). Die Daten in Tabelle 2 geben die ermittelten antimikrobiellen Wirksamkeiten der Beschichtungen als Funktion der Anzahl an koloniebildenden Einheiten (KBE) nach 24h Inkubation bei 37°C (Bakterien) bzw. 30°C (Pilz) wieder. Es ist gegenüber einer Beschichtung ohne erfindungsgemäßen partikulären Zusatz (Additiv) eine vehemente Reduktion der Keimzahlen festzustellen, wobei die zur vollständigen Abtötung aller Keime im Kontakt mit der Beschichtung notwendige Konzentration spezifisch ist. So ist für die niedrigste Konzentration (0,6% Kupfer) eine hohe Wirksamkeit gegen das grampositive Bakterium *S.aureus,* jedoch nicht gegen *K.pneumoniae* und *C.albicans* auszumachen. Erst bei weiterer Erhöhung des biozid wirksamen Kupferanteils in der Beschichtung tritt auch eine überaus starke Wirkung gegenüber dem gramnegativen Bakterium *K.pneumoniae* und dem Pilz *C.albicans* ein. Diese hohe Wirksamkeit bei einem vergleichsweise geringen Metallgehalt von 1,9 Ma-% in der Beschichtung belegt die hohe Effektivität der erfindungsgemäßen partikulären, nicht kovalenten Verbindung, bestehend aus einem amphiphilen dendritischen Makromolekül und Metallnanopartikeln, vorzugsweise Kupfernanopartikeln, als potentem antimikrobiellen Mittel.

### Beispiel 5

### Experimentelle Ergebnisse zur antibakteriellen und antimykotischen Wirkung eines Compoundmaterials in Form einer Folie und eines Spritzgusskörpers ausgerüstet mit einem erfindungsgemäßen partikulären Produkt

Es wurde ein pulverförmiges partikuläres Produkt durch Aufbereitung analog Beispiel 4 aus den gemäß Beispiel 1 hergestellten Dispersionen gewonnen. Dieses wurde per Schmelzeextrusionsverfahren an einem gleichlaufenden Doppelschneckenextruder mit einem Kunststoffmaterial (Polyamid, Ultramid C33) gemischt und am Ende des Extrusionsprozesses als Granulat erhalten. Anschließend wurde aus diesem Granulat durch erneutes Aufschmelzen in einem Extruder bzw. Spritzgießautomaten eine Folie (ca. 70-100 µm dick) bzw. Platten (2mm dick) geformt. Die biologische Wirkung der so präparierten hochtransparenten Folien bzw. charakteristisch rotfarbigen Platten wurde im Vergleich zu gleichartigen, aber nicht modifizierten Formkörpern, hergestellt aus dem gleichen Polymermaterial gemäß ISO 22196 (Platten) bzw. DIN EN ISO 20743 (Folien), mit *S.aureus, K.pneumoniae* und *C.albicans* als Testkeimen, bestimmt. Die Daten in Tabelle 2 geben die ermittelten antimikrobiellen Wirksamkeiten, bestimmt an den Folien- und Plattenmaterialien, als Funktion der Anzahl an koloniebildenden Einheiten (KBE) nach 24h Inkubation bei 37°C (Bakterien) bzw. 30°C (Pilz) wieder. Der Vergleich mit dem Kupfer-freien Compoundmaterial bestätigt eine hohe mikrobiologische Wirkung des erfindungsgemäßen partikulären Produkts als Kunststoffadditiv. Weiterhin zeigt sich anhand der Ergebnisse, dass nicht allein die Additivkonzentration, sondern auch die Form, genauer das damit verbundene Oberfläche/Volumen-Verhältnis eine kritische Rolle bei der Auslegung eines derartigen Funktionsmaterials spielt. So ist zur Erzielung der gleichen Wirksamkeit bei einer Folie im Allgemeinen eine geringere Zusatzmenge notwendig als im Fall eines dickwandigeren Formteils, z.B. einer Platte. Darüber hinaus bestätigen die präsentierten Resultate zugleich, dass ein erfindungsgemäßes partikuläres Produkt generell als verwendungsfähig für die dem Stand der Technik nach bekannten Methoden der Schmelzeverarbeitung und -formgebung von Polymerwerkstoffen angesehen werden kann.

Damit zeigt sich, dass auf derart ausgerüsteten Polymerwerkstoffen (Oberflächen) befindliche Keime effektiv an ihrer Vermehrung gehindert werden, so dass hierdurch eine signifikante Verringerung der Keimbelastung und damit unter anderem auch eine Verminderung der Gefahr der Verbreitung von Keimen in kritischen Bereichen mit hohen Hygienestandards, wie in Krankenhäusern, Altenheimen, öffentlichen Einrichtungen etc., durch den Einsatz des erfindungsgemäßen partikulären Produkts erreicht werden kann.

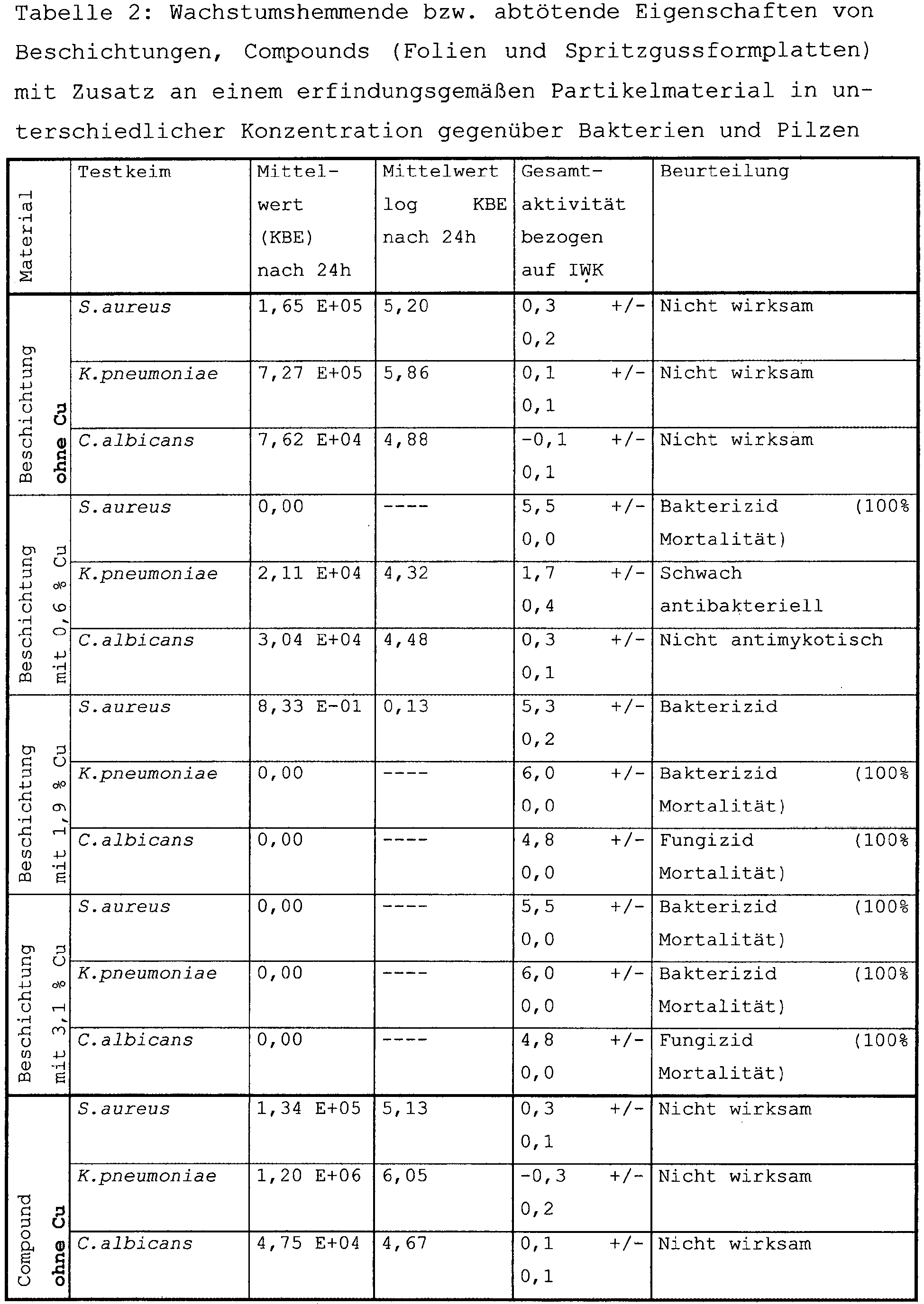

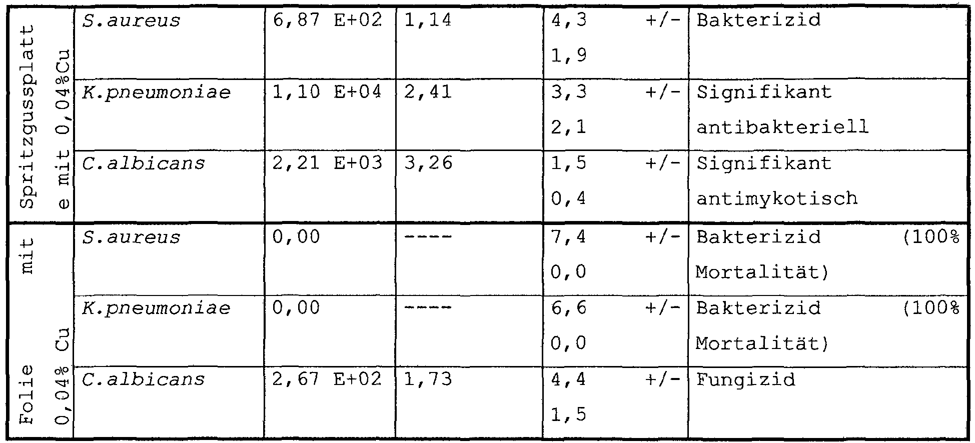

## Patentansprüche

1. Verfahren zur Herstellung von partikulären nicht kovalenten Verbindungen in Form von Metallnanopartikeldispersionen, bestehend aus mindestens einem amphiphilen, partiell modifizierten dendritischen Polymermaterial, basierend auf Polyester, Polyether, Polyglycerin, Polyglycerol, Polyol, Polyether oder Polyamid oder Kombinationen daraus und mit einem Verzweigungsgrad zwischen 50 und 100% sowie einem Molekulargewicht von 5000 bis 50000 g/mol, wobei die Modifizierung der zugänglichen reaktiven Endgruppen mit einem Grad (X) bezogen auf die nominale Gesamtzahl an Endgruppen (N) des dendritischen Polymermaterials zwischen 30%≤X≤90% mit aliphatischen, verzweigten oder aromatischen Resten einer Kettenlänge zwischen 6 und 24 Kohlenstoffatomen ausgeführt wird, und im dendritischen Polymermaterial inter- und intramolekular eingelagerten Metallnanopartikeln, welche, ausgehend von di- und höhervalenten Metallionen, eine definierte Größe bei bimodaler Größenverteilung aufweisen, wobei
- eine Lösung eines amphiphil modifizierten dendritischen Polymers in einem geeigneten Medium A mit Siedepunkt 1 hergestellt,
- diese Lösung mit einer Metallprecursorverbindung in Form eines Metallsalzes in einem molaren Verhältnis von funktionellen Gruppen (Z) des dendritischen Polymerrückgrates und Metallionen (Me ^{y+)} im Bereich von 64:1 bis 2:1 versetzt,
- anschließend mit einer Lösung B, deren Siedepunkt 2 deutlich über dem Siedepunkt 1 von Medium A liegt, eines zur Reduktion der Metallionen hinreichend starken Reduktionsmittels im molaren Verhältnis zu den Metallionen (Me^{y+}) von 10:1 bis 1:1 unter Rühren bei Raumtemperatur und unter halbinerten Bedingungen vermischt und
- das homogenisierte Gemisch aus den Lösungen A und B unter Spülen mit Inertgas in einer Mikrowelle unter gleichzeitigem Rühren bis zum Siedepunkt 1 erhitzt und
solange weiter erhitzt wird, bis Medium A verdampft und eine vollständige Reduktion erfolgt ist und die so hergestellte Produktdispersion aus dem dendritischen Polymermaterial und den eingelagerten Metallnanopartikeln unter Beschleierung mit Stickstoff oder einem Inertgas bis zur geeigneten Weiterverarbeitung abgekühlt wird.

2. Verfahren zur Herstellung von partikulären nicht kovalenten Verbindungen in Form von Metallnanopartikeldispersionen nach Anspruch 1,
**dadurch gekennzeichnet, dass** das dendritische Polymer bevorzugt ein hoch- bzw. hyperverzweigtes Polyamin oder Polyethylenimin mit einem Molekulargewicht von 5000 bis 50000 g/mol ist.

3. Verfahren zur Herstellung von partikulären nicht kovalenten Verbindungen in Form von Metallnanopartikeldispersionen nach Anspruch 1 und 2,
**dadurch gekennzeichnet, dass** das dendritische Polymermaterial an reaktiven Endgruppen mit aliphatischen, verzweigten oder aromatischen Resten, bevorzugt mit n-Alkylen mit einer Kettenlänge zwischen 6 und 24 Kohlenstoffatomen oder Kombinationen verschieden langer n-Alkyle, modifiziert ist und dadurch in ein Amphiphil überführt wird.

4. Verfahren zur Herstellung von partikulären nichtkovalenten Verbindungen in Form von Metallnanopartikeldispersionen nach Anspruch 1,
**dadurch gekennzeichnet, dass** das die Metallionen Cu2+, Sn2+, Ni2+, Pd2+, Pt2+, Co2+, Fe2+, Zn2+, Fe3+, Mo3+, Cr3+, Nb3+ oder deren Mischungen oder Legierungen umfassen.

5. Verfahren zur Herstellung von partikulären nicht kovalenten Verbindungen in Form von Metallnanopartikeldispersionen nach Anspruch 4, **dadurch gekennzeichnet, dass** die in nicht kovalenter Form intra- und intermolekular im amphiphilen dendritischen Polymermaterial eingebetteten Metallnanopartikel eine mittlere Grösse zwischen 1 und 250nm, bevorzugt eine bimodale Grössenverteilung von Partikeln von im Mittel 1 bis 10nm und 50 bis 200nm aufweisen.

6. Verfahren zur Herstellung von partikulären nicht kovalenten Verbindungen in Form von Metallnanopartikeldispersionen nach Anspruch 1, **dadurch gekennzeichnet, dass** die Lösung B eines geeigneten Reduktionsmittels bevorzugt ein in Ethylenglykol gelöstes Natriumhypophosphit ist.

7. Verfahren zur Herstellung von partikulären nicht kovalenten Verbindungen in Form von Metallnanopartikeldispersionen nach Anspruch 1,
**dadurch gekennzeichnet, dass** das homogenisierte Gemisch aus den Lösungen A und B zunächst bis zum Siedepunkt 1 der Lösung A und nach deren Abdampfen bis zum höhergelegenen Siedepunkt 2 der Lösung B oder dessen Nähe erhitzt wird.

8. Partikuläre nicht kovalente Verbindungen in der Form von Metallnanopartikeldispersionen von verbesserter Lagerstabilität, bestehend aus einem amphiphilen, 3 partiell modifizierten dendritischen Polymermaterial, basierend auf Polyester, Polyether, Polyglycerin, Polyglycerol, Polyol, Polyether oder Polyamid oder Kombinationen daraus und mit einem Verzweigungsgrad zwischen 50 und 100% sowie einem Molekulargewicht von 5000 bis 50000 g/mol, wobei die Modifizierung der zugänglichen reaktiven Endgruppen mit einem Grad (X) bezogen auf die nominale Gesamtzahl an Endgruppen (N) des dendritischen Polymermaterials zwischen 30%≤X≤90% mit aliphatischen, verzweigten oder aromatischen Resten einer Kettenlänge zwischen 6 und 24 Kohlenstoffatomen beträgt, und dessen Polymermaterial inter- und/oder intramolekular eingelagerte Metallnanopartikel, ausgehend von di- und höhervalenten Metallionen, von definierter Größe bei bimodaler Größenverteilung enthält, welche nicht wasserlöslich und amphiphil sind, herstellbar nach dem Verfahren gemäß Anspruch 1 bis 7.

9. Partikuläre nicht kovalente Verbindungen in der Form von Metallnanopartikeldispersionen nach Anspruch 8, **dadurch gekennzeichnet, dass** die Verbindung als Dispersion oder, nach weitest gehendem Entzug des Dispersionsmediums, in pastöser bis pulverförmiger Form ein Bestandteil einer fluiden oder festen Formulierung, einer Beschichtung oder, inkorporiert in dessen Volumen, eines Polymerwerkstoffes zur funktionellen Ausrüstung ist.

10. Partikuläre nicht kovalente Verbindungen in der Form von Metallnanopartikeldispersionen gemäß den Ansprüchen 8 und 9, zur bioziden Ausrüstung von Produkten einschließlich ihrer fungiziden und/oder algiziden Anwendung, zum Aufbau von leitfähigen und/oder magnetischen Strukturen, für Bereiche der Filter-, Membran- und Katalysatortechnik, in Systemen zur Identitätserkennung und/oder für Pigment-, Sensor- und Markeranwendungen.

## Claims

1. A method for the manufacture of particulate non-covalent compounds in the form of metallic nanoparticle dispersions, consisting of at least one amphiphilic, partially modified dendritic polymeric material based on polyester, polyether, polyglycerin, polyglycerol, polyol, polyether or polyamide or combinations thereof and with a degree of branching of between 50% and 100% as well as a molecular weight of 5000 to 50000 g/mole, wherein the modification of the accessible reactive end groups is carried out to a degree (X) with respect to the nominal total number of end groups (N) of the dendritic polymeric material which is between 30% ≤ X ≤ 90% with aliphatic, branched or aromatic residues with a chain length of between 6 and 24 carbon atoms, and of metallic nanoparticles embedded inter- and intra-molecularly in the dendritic polymeric material, which nanoparticles, based on divalent and higher valency metal ions, exhibit a defined size with a bimodal size distribution, wherein:
- a solution of an amphiphilic modified dendritic polymer is produced in a suitable medium A with a boiling point 1,
- this solution is supplemented with a metallic precursor compound in the form of a metallic salt in a molar ratio of functional groups (Z) of the dendritic polymer backbone to metal ions (Me^{y+}) in the range 64:1 to 2:1,
- next, it is mixed with a solution B, which has a boiling point 2 that is substantially higher than boiling point 1 of medium A, of a reducing agent that is of sufficient strength to reduce the metal ions, in a molar ratio to the metal ions (Me^{y+}) of 10:1 to 1:1, with stirring at ambient temperature and under semi-inert conditions, and
- the homogenized mixture of the solutions A and B is heated in a microwave oven, with simultaneous stirring while flushing with an inert gas, to the boiling point 1 and then heated further until medium A has been evaporated off and reduction is complete, and the product dispersion of the dendritic polymeric material and the embedded metallic nanoparticles produced in this manner is cooled under an atmosphere of nitrogen or an inert gas until appropriate further processing is carried out.

2. The method for the manufacture of particulate non-covalent compounds in the form of metallic nanoparticle dispersions as claimed in claim 1, **characterized in that** the dendritic polymer is preferably a highly branched or hyperbranched polyamine or polyethyleneimine with a molecular weight of 5000 to 50000 g/mole.

3. The method for the manufacture of particulate non-covalent compounds in the form of metallic nanoparticle dispersions as claimed in claim 1 and claim 2, **characterized in that** the dendritic polymeric material is modified at reactive end groups with aliphatic, branched or aromatic residues, preferably with n-alkylene with a chain length between 6 and 24 carbon atoms or combinations of n-alkyls of various lengths, and thereby transformed into an amphiphilic compound.

4. The method for the manufacture of particulate non-covalent compounds in the form of metallic nanoparticle dispersions as claimed in claim 1, **characterized in that** the metal ions comprise Cu²⁺, Sn²⁺, Ni²⁺, Pd²⁺, Pt²⁺, Co²⁺, Fe²⁺, Zn²⁺, Fe³⁺, Mo³⁺, Cr³⁺, Nb³⁺ or mixtures or alloys thereof.

5. The method for the manufacture of particulate non-covalent compounds in the form of metallic nanoparticle dispersions as claimed in claim 4, **characterized in that** the metallic nanoparticles which are in the non-covalent form and are embedded intra- and intermolecularly in the amphiphilic dendritic polymeric material exhibit a mean size of between 1 nm and 250 nm, preferably a bimodal size distribution of particles with a mean of 1 nm to 10 nm and 50 nm to 200 nm.

6. The method for the manufacture of particulate non-covalent compounds in the form of metallic nanoparticle dispersions as claimed in claim 1, **characterized in that** the solution B of a suitable reducing agent is preferably a sodium hypophosphite dissolved in ethylene glycol.

7. The method for the manufacture of particulate non-covalent compounds in the form of metallic nanoparticle dispersions as claimed in claim 1, **characterized in that** the homogenized mixture of the solutions A and B is initially heated to boiling point 1 of solution A and after it has been evaporated off, the mixture is heated to the higher boiling point 2 of solution B or close thereto.

8. Particulate non-covalent compounds in the form of metallic nanoparticle dispersions with an improved stability on storage, consisting of an amphiphilic partially modified dendritic polymeric material based on polyester, polyether, polyglycerin, polyglycerol, polyol, polyether or polyamide or combinations thereof and with a degree of branching of between 50% and 100% as well as a molecular weight of 5000 to 50000 g/mole, wherein the modification of the accessible reactive end groups is carried out to a degree (X) with respect to the nominal total number of end groups (N) of the dendritic polymeric material which is between 30% ≤ X ≤ 90% with aliphatic, branched or aromatic residues with a chain length of between 6 and 24 carbon atoms, and said polymeric material contains inter- and/or intra-molecularly embedded metallic nanoparticles based on divalent and higher valency metal ions, with a defined size and with a bimodal size distribution, which are not water-soluble and are amphiphilic, which can be manufactured using the method as claimed in claims 1 to 7.

9. Particulate non-covalent compounds in the form of metallic nanoparticle dispersions as claimed in claim 8, **characterized in that** the compound is a dispersion or, after withdrawing as much of the dispersing medium as possible in order to form a paste or a powder, a component of a fluid or solid formulation, of a coating or, incorporated into its volume, of a polymeric substance in order to supply functional characteristics.

10. Particulate non-covalent compounds in the form of metallic nanoparticle dispersions as claimed in claims 8 and 9, to supply products with biocidal characteristics including their fungicidal and/or algicidal application, for the construction of conductive and/or magnetic structures, in the fields of filter, membrane and catalyst technology, in identification systems and/or for pigment, sensor and marker applications.

## Revendications

1. Procédé de préparation de composés particulaires non covalents sous forme de dispersions de nanoparticules métalliques, se composant d'au moins un matériau polymère dendritique amphiphile partiellement modifié, sur la base de polyester, de polyéther, de polyglycérine, de polyglycérol, de polyol, de polyéther ou de polyamide ou de combinaisons de ceux-ci, et avec un degré de ramification compris entre 50 et 100 % et un poids moléculaire compris entre 5000 et 50000 g/mol, dans lequel la modification des groupes terminaux réactifs accessibles est réalisée avec un degré (X), par rapport au nombre total nominal de groupes terminaux (N) du matériau polymère dendritique, compris entre 30 % ≤ X ≤ 90 %, avec des radicaux aliphatiques, ramifiés ou aromatiques d'une longueur de chaîne comprise entre 6 et 24 atomes de carbone, ainsi que de nanoparticules métalliques enrobées de façon inter- et intramoléculaire dans ledit matériau polymère dendritique, qui, partant d'ions métalliques divalents et de valence supérieure, présentent une taille définie dans une distribution dimensionnelle bimodale, dans lequel
- on prépare une solution d'un polymère dendritique modifié de façon amphiphile, dans un milieu A approprié ayant un point d'ébullition 1,
- cette solution est mélangée avec un composé précurseur métallique sous forme d'un sel métallique, dans un rapport molaire de groupes fonctionnels (Z) de la chaîne principale polymère dendritique et d'ions métalliques (Me^{y+}) compris entre 64:1 et 2:1,
- est mélangée ensuite en agitant, à température ambiante et dans des conditions semi-inertes, avec une solution B - dont le point d'ébullition 2 est sensiblement supérieur au point d'ébullition 1 du milieu A - d'un agent réducteur suffisamment fort pour réduire les ions métalliques, dans le rapport molaire aux ions métalliques (Me^{y+}) compris entre 10:1 et 1:1, et
- le mélange homogénéisé des solutions A et B est chauffé dans un four à micro-ondes, avec un balayage par gaz inerte et tout en agitant, jusqu'au point d'ébullition 1, et le chauffage est poursuivi jusqu'à ce que le milieu A se soit évaporé et qu'une réduction complète se soit produite, et la dispersion de produit ainsi préparée se composant du matériau polymère dendritique et des nanoparticules métalliques enrobées est refroidie, tout en étant couverte d'un voile d'azote ou d'un gaz inerte, jusqu'à la transformation ultérieure appropriée.

2. Procédé de préparation de composés particulaires non covalents sous forme de dispersions de nanoparticules métalliques, selon la revendication 1, **caractérisé par le fait que** le polymère dendritique est, de préférence, un polyamine ou polyéthylèneimine hautement ramifié ou bien hyper-ramifié ayant un poids moléculaire compris entre 5000 et 50000 g/mol.

3. Procédé de préparation de composés particulaires non covalents sous forme de dispersions de nanoparticules métalliques, selon la revendication 1 et 2, **caractérisé par le fait que** le matériau polymère dendritique est modifié sur des groupes terminaux réactifs avec des radicaux aliphatiques, ramifiés ou aromatiques, de préférence des n-alkyles d'une longueur de chaîne comprise entre 6 et 24 atomes de carbone ou des combinaisons de n-alkyles de longueur différente, et est transformé ainsi en un amphiphile.

4. Procédé de préparation de composés particulaires non covalents sous forme de dispersions de nanoparticules métalliques, selon la revendication 1, **caractérisé par le fait que** les ions métalliques comprennent Cu2+, Sn2+, Ni2+, Pd2+, Pt2+, Co2+, Fe2+, Zn2+, Fe3+, Mo3+, Cr3+, Nb3+ ou les mélanges ou alliages de ceux-ci.

5. Procédé de préparation de composés particulaires non covalents sous forme de dispersions de nanoparticules métalliques, selon la revendication 4, **caractérisé par le fait que** les nanoparticules métalliques qui sont enrobées sous forme non covalente, de façon inter- et intramoléculaire, dans le matériau polymère dendritique amphiphile présentent une taille moyenne comprise entre 1 et 250 nm, de préférence une distribution dimensionnelle bimodale de particules comprise, en moyenne, entre 1 et 10 nm et entre 50 et 200 nm.

6. Procédé de préparation de composés particulaires non covalents sous forme de dispersions de nanoparticules métalliques, selon la revendication 1, **caractérisé par le fait que** la solution B d'un agent réducteur approprié est, de préférence, un hypophosphite de sodium dissous dans de l'éthylène glycol.

7. Procédé de préparation de composés particulaires non covalents sous forme de dispersions de nanoparticules métalliques, selon la revendication 1, **caractérisé par le fait que** le mélange homogénéisé des solutions A et B est chauffé d'abord jusqu'au point d'ébullition 1 de la solution A et, après que celle-ci s'est évaporée, jusqu'au point d'ébullition 2 plus élevé de la solution B ou à proximité de celui-ci.

8. Composés particulaires non covalents sous forme de dispersions de nanoparticules métalliques ayant une stabilité au stockage améliorée, se composant d'un matériau polymère dendritique amphiphile partiellement modifié, sur la base de polyester, de polyéther, de polyglycérine, de polyglycérol, de polyol, de polyéther ou de polyamide ou de combinaisons de ceux-ci, et avec un degré de ramification compris entre 50 et 100 % et un poids moléculaire compris entre 5000 et 50000 g/mol, la modification des groupes terminaux réactifs accessibles étant réalisée avec un degré (X), par rapport au nombre total nominal de groupes terminaux (N) du matériau polymère dendritique, compris entre 30 % ≤ X ≤ 90 %, avec des radicaux aliphatiques, ramifiés ou aromatiques d'une longueur de chaîne comprise entre 6 et 24 atomes de carbone, et dont le matériau polymère contient des nanoparticules métalliques enrobées de façon inter- et/ou intramoléculaire qui, partant d'ions métalliques divalents et de valence supérieure, présentent une taille définie dans une distribution dimensionnelle bimodale qui ne sont pas hydrosolubles et amphiphiles, aptes à être préparés selon le procédé selon la revendication 1 à 7.

9. Composés particulaires non covalents sous forme de dispersions de nanoparticules métalliques, selon la revendication 8, **caractérisés par le fait que** ledit composé entre, en tant que dispersion ou, après avoir supprimé dans une large mesure le milieu de dispersion, sous forme pâteuse à pulvérulente, dans la composition d'une formulation fluide ou solide, d'un revêtement ou, incorporé dans son volume, d'un matériau polymère pour le traitement fonctionnel.

10. Composés particulaires non covalents sous forme de dispersions de nanoparticules métalliques, selon les revendications 8 et 9, pour le traitement biocide de produits, y compris leur application fongicide et/ou algicide, pour réaliser des structures conductrices et/ou magnétiques, pour les domaines de la technique de filtration, de membrane et de catalyseur, dans des systèmes pour l'identification et/ou pour des applications à pigments, capteurs et marqueurs.
